# EUROPÄISCHE PATENTSCHRIFT

(11) **EP 1 685 285 B1**
(45) Veröffentlichungstag und Bekanntmachung des Hinweises auf die Patenterteilung: **15.12.2010**
(21) Anmeldenummer: 04765876.0
(22) Anmeldetag: 07.10.2004
(51) Int. Cl.: D03D 3/02, D03D 15/04, B29C 61/06, F16L 11/02, H01R 4/72

(54) **GEWEBESCHLAUCH UND BLOCKIERFADEN ZUR VERWENDUNG IN EINEM GEWEBESCHLAUCH**
FABRIC HOSE AND BLOCKING THREAD FOR USE IN A FABRIC HOSE
GAINE TEXTILE ET FIL DE BLOCAGE A UTILISER DANS UNE GAINE TEXTILE

(30) Priorität: 18.11.2003 DE 10353777
(43) Veröffentlichungstag der Anmeldung: 02.08.2006
(73) Patentinhaber: Piwonski, Timo, 96364 Marktrodach (DE)
(72) Erfinder: Piwonski, Timo, 96364 Marktrodach (DE)
(74) Vertreter: Fischer, Matthias
(86) Internationale Anmeldenummer: PCT/EP2004/011219
(87) Internationale Veröffentlichungsnummer: WO 2005/049904

(56) Entgegenhaltungen:
- EP-A- 0 453 053
- DE-A- 10 212 920
- US-A- 4 668 545

## Beschreibung

Die vorliegende Erfindung betrifft einen radial schrumpfbaren zweilagig gewebten Gewebeschlauch mit einer oberen und einer unteren Gewebelage, wobei die Gewebelagen an ihren Kanten mit Bindungskettfäden miteinander verbunden sind, mit Schußfäden aus hochschrumpfbarem Material und Kettfäden aus schrumpfarmem Material.

Ein derartiger Gewebeschlauch ist aus der DE 102 12 920 A1 bekannt. Er zeigt jedoch einige Mängel. So finden der oder die Bindungskettfäden, die einfach oder im Gegentritt eingearbeitet sind, im Gewebe nicht genügend Halt, so daß sich beide Bandhälften von einem Ende her leicht voneinander trennen lassen, weil die Bindungskettfäden einfach aus der Bandkonstruktion herausrutschen. Der Schlauch kann sich zu zwei einzelnen Bändern "zerlegen". Dies ist für die geplante Anwendung als Ummantelung, die auf Stangen, Schläuchen, Profilen und dergleichen aufgeschrumpft werden und dort im wesentlichen unverrückbar fest angebracht werden soll, untragbar. Nun könnte durch Einarbeitung von mehreren Hoch-Tief-arbeitenden Bindungskettfäden auch in glatter Qualität eine (insbesondere in Kantenbereich) gesicherte Schlauchkonstruktion gefertigt werden. Dies würde dann auch einen runden Schlauch ergeben, jedoch würden die Kanten zu stark aus der restlichen Gewebeoberfläche herausstehen und eine potentielle Gefahr für mechanische Beschädigungen darstellen.

Aus dem US-Patent Nr. 4,820,561 von Pithouse et al. ist ein in der Dimension rückstellbarer Gegenstand in einer Verbundstruktur eines wärmerückstellbaren Gewebes mit einer Polymermatrix bekannt, das z.B. zur Ummantelung von Kabelspleißstellen und dergleichen eingesetzt wird, um die entsprechende Kupplungsstelle gegen Feuchtigkeit, Chemikalien sowie Beschädigung durch Tiere zu schützen. Hierbei wird das Ummantelungsmaterial mit einer Beschichtung aus adhäsivem Material versehen, welches bei der Montage zu dem zu schützenden Gegenstand zeigend montiert wird. Die Beschichtung des gesamten Mantelmaterials mit einem adhäsiven Gewebe ist aufwendig und kostspielig und macht die Ummantelung voluminös. Die hier gezeigte Ummantelung wird aus einem Flächengebilde zu einem rohrförmigen Gegenstand geformt und erst mit einem separaten Verschlußmittel zu einer geschlossenen Ummantelung geformt.

Aus dem US-Patent 4,576,666 von Harris et al. ist ein wärmerückstellbarer Gegenstand bekannt, der ebenfalls aus einem flächenmäßigen Gebilde zu einem Rohr geformt und mit einem Verschlußmittel versehen ist. Vor dem thermischen Schrumpfen des zu einem rohrförmigen Gebilde geformten Gewebes, muß ein Verschluß angebracht werden, der außerdem noch gegen die Außenseite des umhüllenden Gegenstands aufträgt und, sofern der zu umhüllende Gegenstand eine nicht geradlinige Form hat, unter Zug- oder Druckspannung steht, wobei in sollen Fällen die Umhüllung relativ sperrig wird.

Aus dem europäischen Patent EP 0 268 838 B1 (Verseidag) ist ein Flächengebilde aus Fasern, insbesondere als Verstärkungseinlage für Kunststoffteile bekannt. Dieses Flächengebilde kann für rohr- oder stangenförmige Bauteile schlauchförmig ausgebildet werden, zeichnet sich jedoch dadurch aus, daß die darin angeordneten Fäden nach Temperatureinwirkung zueinander Relativbewegungen durchführen können.

Es ist Aufgabe der vorliegenden Erfindung, einen radial schrumpfbaren Gewebeschlauch mit Schußfäden aus hochschrumpfbarem Material vorzuschlagen, der auf Stangen, Schläuchen, Profilen und dergleichen aufgeschrumpft werden und dort im wesentlichen unverrückbar fest angebracht werden kann, als Gewebeschlauch stabil bleibt und außerdem kostengünstig herzustellen ist, sowie einen, insbesondere zur Verwendung in einem erfindungsgemäßen Gewebeschlauch geeigneten Blockierfaden vorzuschlagen.

Die Aufgabe wird gelöst mit einem Gewebeschlauch nach Anspruch 1. Durch die ungleichmäßige und rauhe Oberfläche des Blockierfadens wird sein Herausrutschen aus der Schlauchkonstruktion wirksam verhindert. Der hier erfindungsgemäß eingesetzte Blockierfaden hat eine "Dick-dünn-Struktur". Diese Fadenstruktur hat beispielsweise den Charakter einer Stapelfaser, jedoch ist die äußere Form des gehäkelten Blockierfadens mit der Form einer Gliederkette zu vergleichen. Diese Fadenstruktur hat eine gleichmäßige oder ungleichmäßige rauhe dick-dünn-Struktur, die eine positive Einwirkung auf die Festigkeit der beiden Gewebeschlauchkanten hat. Der Blockierfaden hat den großen Vorteil, daß er exakt allen individuellen Bedürfnissen, insbesondere speziellen Maschendichten angepaßt werden kann. Der Blockierfaden wird vorzugsweise als Maschenstäbchen in den später zu schrumpfenden Gewebeschlauch eingearbeitet, wobei er vom Schußfaden und vom Maschenfaden der Webmaschine umlegt wird. Gegenüber der aus dem Stand der Technik bekannten Lösung wird dabei eine Bremswirkung in der Gewebeschlauchkante erzielt. Der Blockierfaden krallt sich, unterstützt durch die Webdichte und die Fadenabstände, in den Schußumkehrstellen sowie in den Maschenhenkeln des Gewebes fest und läßt sich bereits im Rohzustand kaum bzw. gar nicht mehr heraustrennen.

Als vorteilhafte Weiterbildung der Erfindung kann zur Sicherheit neben dem Blockierfaden noch ein feiner Binderfaden im Gegentritt (Tafet) arbeiten, der sich an den Blockierfaden anlegt und für zusätzliche Sicherheit und Festigkeit sorgt.

Der erfindungsgemäße Gewebeschlauch kann vorteilhafterweise sehr einfach auf sich längserstreckende Gegenstände aufgeschoben und durch Erwärmung nahezu unverrückbar festgelegt werden. Die Montage von Schlauchabschnitten beliebiger Länge "vor Ort" ist ebenso von Vorteil wie die platzsparende Lager- und Transporteignung des erfindungsgemäßen Gewebeschlauches.

In einer vorteilhaften Weiterbildung des Verfahrens ergibt sich der außerordentliche Vorteil, daß beim Aufschrumpfen des Schlauches auf einen zu ummantelnden Gegenstand, das unter Zufuhr von Wärme durchgeführt wird, die im Gewebeschlauch eingelegten Schmelzkleberfäden gleichzeitig schmelzen und zwischen der Ummantelung und dem zu ummantelnden Gegenstand eine Klebeverbindung schaffen. Die hierdurch geschaffene Klebeverbindung zwischen dem erfindungsgemäßen Gewebeschlauch und dem Gegenstand kann in sehr kurzer Zeit und ohne großen zusätzlichen Wärmeaufwand erreicht werden, da der Schmelzkleber bereits beim Schrumpfungsprozeß schmilzt. Der Gewebeschlauch liegt nach dem Aufschrumpfungsvorgang unverrückbar auf dem Gegenstand fest. Ein weiterer besonderer Vorteil des erfindungsgemäßen Gewebeschlauchs besteht darin, daß die Schmelzkleberfäden schon beim Webvorgang des Schlauchs ohne großen Zusatzaufwand miteingelegt werden können. Es ist nicht, wie beim Stand der Technik diskutiert, ein zusätzlicher Arbeitsschritt für die Aufbringung eines adhäsiven Materials auf die Innenwand des Gewebeschlauchs erforderlich.

Eine vorteilhafte Weiterbildung des erfindungsgemäßen Gewebeschlauchs besteht darin, daß die Schmelzkleberfäden nur in von den Schußumkehrstellen entfernten Bereichen eingelegt sind. Dies hat den Vorteil, daß das Material der Schmelzkleberfäden beim Schrumpfungsvorgang nicht an die äußere Oberfläche gelangen und zu Verunreinigungen und dergleichen an der äußeren Oberfläche des Gewebeschlauchs führen kann.

In einer anderen vorteilhaften Weiterbildung der Erfindung ist der Gewebeschlauch dadurch gekennzeichnet, dass er eine nicht lineare, sondern bogenförmige Gestalt hat. Dies hat in solchen Fällen, in denen kurvenförmige Gegenstände ummantelt werden sollen, den Vorteil, dass beim Schrumpfen in sogenannten Innenkurven keine Stauchspannungen und in sogenannten Außenkurven keine Zugspannungen auftreten, die insgesamt eine ungleichmäßige Belastung des erfindungsgemäßen Gewebeschlauchs verursachen könnten.

In einer anderen vorteilhaften Weiterbildung der Erfindung ist der Gewebeschlauch dadurch ausgezeichnet, dass die Schmelzkleberfaden geeignet sind, nach einer einmaligen Erhitzung auf eine bestimmte Temperatur, irreversibel auszuhärten. Bei Verwendung eines derartigen Gewebeschlauchs in einer Umgebung, die die zur Verklebung erforderliche Temperatur übersteigt, ist keine Gefahr gegeben, dass sich der erfindungsgemäße Gewebeschlauch aufgrund der hohen Temperatur von dem Gegenstand, den er schützen soll, lösen kann.

In einer anderen vorteilhaften Weiterbildung der Erfindung weist der Gewebeschlauch in den Kantenbereichen und/oder in der Mitte der oberen und der unteren Gewebelage wenigstens einen gegenüber den anderen dickeren Kettfaden auf. Dadurch lässt sich vorteilhafterweise eine "Längsrippigkeit" schaffen. Die gegenüber den anderen dickeren Kettfäden wirken wie Abstandshalter zwischen den Gewebelagen und halten den Gewebeschlauch offen, wodurch die Montage erleichtert wird. Die beiden Gewebelagen liegen nicht so dicht beieinander wie bei gleichmäßig dicken Kettfaden und erlauben somit eine rationellere Einbringung des zu ummantelnden Gegenstandes in den Schlauch.

Die Aufgabe wird auch gelöst mit der Verwendung eines Blockierfadens gemäß Anspruch 13, 17 und 18. Wie bereits oben erwähnt hat der erfindungsgemäße Blockierfaden eine gleichmäßige oder ungleichmäßige raue dick-dünn-Struktur, die eine positive Einwirkung auf die Festigkeit der beiden Gewebeschlauchkanten hat. Der Blockierfaden hat den großen Vorteil, dass er exakt allen individuellen Bedürfnissen, insbesondere speziellen Maschendichten angepasst werden kann. Der Blockierfaden wird vorzugsweise als Maschenstäbchen in den später zu schrumpfenden Gewebeschlauch eingearbeitet, wobei er vom Schussfaden und vom Maschenfaden der Webmaschine umlegt wird. Gegenüber der aus dem Stand der Technik bekannten Lösung wird dabei eine Bremswirkung in der Gewebeschlauchkante erzielt. Der Blockierfaden krallt sich, unterstützt durch die Webdichte und die Fadenabstände, in den Schussumkehrstellen sowie in den Maschenhenkeln des Gewebes fest und lässt sich bereits im Rohzustand kaum bzw. gar nicht mehr heraustrennen.

In einer vorteilhaften Weiterbildung der Erfindung ist der Blockierfaden als Maschenstäbchen mit zusätzlichem Schussfaden ausgebildet.

In einer weiteren vorteilhaften Weiterbildung der Erfindung ist der Blockierfaden als Maschenstäbchen mit zusätzlichen zwei Schussfäden ausgebildet.

In einer weiteren vorteilhaften Weiterbildung der Erfindung ist der Blockierfaden als Maschenstäbchen mit zusätzlichen zwei Schussfäden, von denen wenigstens einer bei der Herstellung des Blockierfadens über Kraller gehalten wird, ausgebildet ist.

Die Aufgabe wird auch gelöst mit der Verwendung eines Blockierfadens gemäß Anspruch 17, der dadurch gekennzeichnet ist, dass der Blockierfaden als gewebter Blockierfaden, gefertigt auf einer Nadelbandwebmaschine als Schlauch oder Bändchen ausgebildet ist.

Die Aufgabe wird auch gelöst mit der Verwendung eines Blockierfadens gemäß Anspruch 18, der dadurch gekennzeichnet ist, dass der Blockierfaden als Geflechtbändchen oder Geflechtschlauch, gefertigt auf einer Flechtmaschine und mittels Thermokalander mit "dick-dünn-Struktur" versehen, ausgebildet ist.

Weitere Merkmale und Vorteile der Erfindung ergeben sich aus den Unteransprüchen.

Die Erfindung wird nun unter Zuhilfenahme der Zeichnung anhand eines Beispiels kurz erläutert.
Fig. 1 zeigt in schematischer Darstellung einen Querschnitt durch einen erfindungsgemäßen Gewebeschlauch.
Fig. 2 zeigt in schematischer Darstellung einen Längsschnitt durch einen erfindungsgemäßen Gewebeschlauch.
Fig. 3 zeigt schematisch in auseinandergezogener Darstellung die Anordnung von oberer Gewebelage und unterer Gewebelage eines verbindungsgemäßen Gewebeschlauchs sowie die Anbindung untereinander.
Fig. 4 zeigt die Darstellung der Anordnung gemäß Fig. 3, wobei zusätzlich Schmelzkleberfaden in Kette und Schuss von oberer Gewebelage und unterer Gewebelage dargestellt sind.
Fig. 5 zeigt schematisch einen Ausschnitt eines Blockierfadens ausgebildet als gehäkeltes, gewerktes oder gestricktes Maschenstäbchen.
Fig. 6 zeigt schematisch einen Ausschnitt eines Blockierfadens als Maschenstäbchen mit zusätzlichem Schussfaden.
Fig. 7 zeigt schematisch einen Ausschnitt eines Blockierfadens als Maschenstäbchen mit zusätzlichen zwei Schussfäden.
Fig. 8 zeigt schematisch einen Ausschnitt eines Blockierfadens als Maschenstäbchen mit zusätzlichen zwei Schussfäden von denen wenigstens einer bei der Herstellung des Blockierfadens über Kraller gehalten wird.
Fig. 9 zeigt schematisch einen Ausschnitt eines erfindungsgemäßen Blockierfadens als gewebten Blockierfaden, gefertigt auf einer Nadelbandmaschine als Schlauch oder als Bändchen.
Fig. 10 zeigt schematisch einen Ausschnitt eines erfindungsgemäßen Blockierfadens als Geflechtbändchen oder Geflechtschlauch, gefertigt auf einer Flechtmaschine und mittels Thermokalander mit "Dick-dünn-Struktur" versehen.

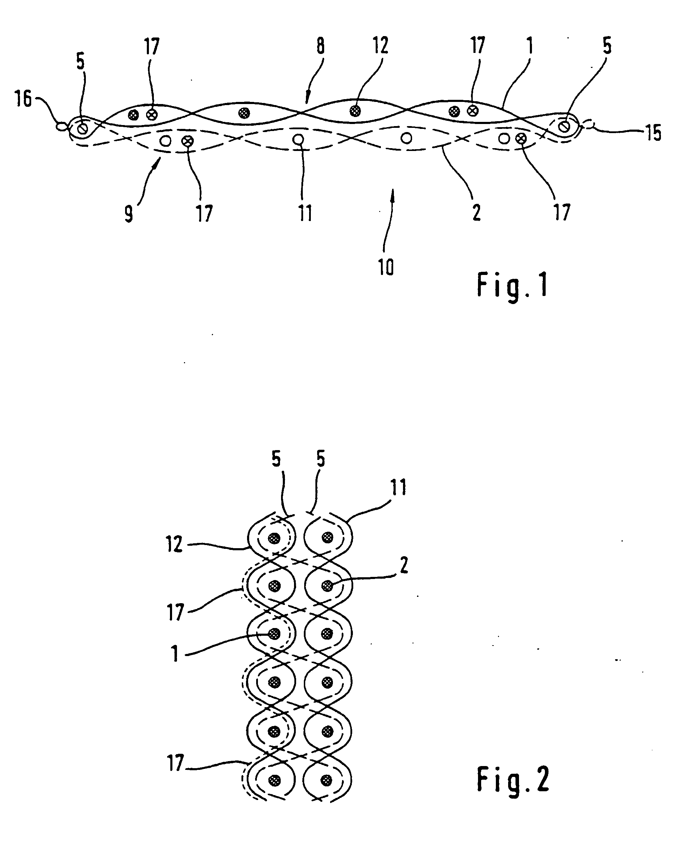

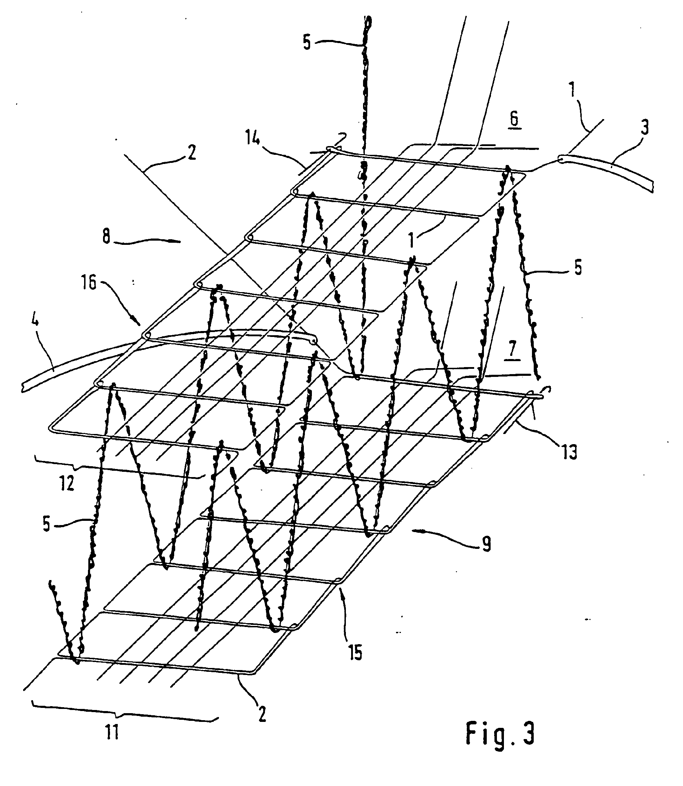

Fig. 1 zeigt einen Gewebeschlauch 10, geschnitten quer zur Längsrichtung des Gewebeschlauchs mit einer oberen Gewebelage 8 und einer unteren Gewebelage 9 sowie entsprechenden oberen Kettfaden 12 und unteren Kettfaden 11. Die Zahl der Kettfaden ist in einem derartigen Gewebeschlauch tatsächlich wesentlich höher. Zur Vereinfachung der Darstellung wurden hier jeweils symbolisch nur je vier Kettfäden dargestellt. Die obere Gewebelage 8 wird auch aus Schussfaden 1 gebildet, die untere Gewebelage 9 aus Schussfäden 2. Die Schussfäden 1 und 2 werden mittels in Fig. 3 abgebrochen dargestellten Schussnadeln 3 und 4 in das Band eingewebt, und zwar derart, dass der untere Schussfaden 2 mittels einer Wirknadel 13 in sich selbst vermascht wird, siehe Bezugszeichen 15 und der obere Schussfaden 1 mittels einer Wirknadel 14 in sich selbst vermascht wird, siehe Bezugszeichen 16. Diese Maschenbindungen sind symbolisch auch in Fig. 1 dargestellt. Die obere Gewebelage 8 und die untere Gewebelage 9 sind über Blockierfäden 5 mit "Dick-dünn-Struktur" miteinander verbunden, so daß sich im Ergebnis ein gewebter Schlauch 10 ergibt. Die Schußfäden 1 und 2 des erfindungsgemäßen Gewebeschlauchs 10 bestehen aus hochschrumpfbarem Material. Hierzu eignet sich insbesondere ein thermoplastischer Werkstoff, wie zum Beispiel Polyolephinen (Polyester, LDPE, HDPE, LLDPE etc.) oder ein über die Verreckungsintensität modifiziertes Polyamid, wogegen für die unteren und oberen Kettfäden 11 und 12 vorzugsweise Polyester-Material eingesetzt wird.

Soll der hier dargestellte erfindungsgemäße Gewebeschlauch auf einem zu ummantelnden Gegenstand aufgeschrumpft werden, wird er auf den Gegenstand aufgeschoben und dann beispielsweise mit Heißluft oder im Rahmen der Weiterbehandlung in einem Vulkanisationsprozeß unter Dampf und/oder Druckbeaufschlagung oder einem anderen geeigneten Verfahren erwärmt. Die thermoplastischen Schußfäden 1 und 2 schrumpfen infolge der Erwärmung. Der Gewebeschlauch legt sich so eng wie möglich an den zu ummantelnden Gegenstand.

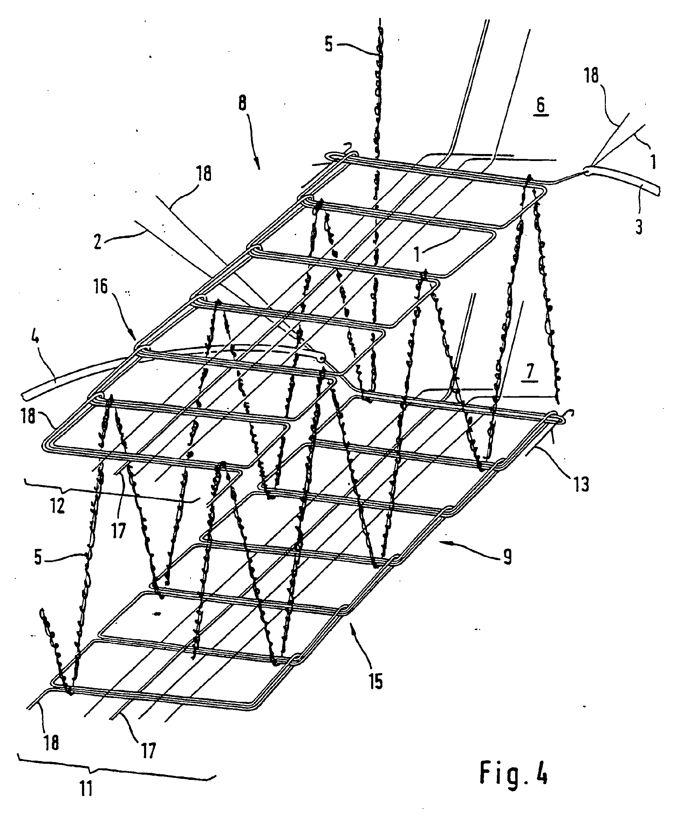

Um eine noch verbesserte Fixierung des Gewebeschlauchs am zu ummantelnden Gegenstand zu erreichen, insbesondere, wenn dieser eine geradlinige Form hat, werden zweckmäßigerweise Schmelzkleberfäden 17, 18 in Form von Fäden, Bändern oder Folien in das Gewebe in Kett- und/oder Schußrichtung eingelegt. Fig. 1, 3 und 4 zeigen die Anordnung von Schmelzkleberfäden 17 als parallel zu Kettfäden verlaufende Fäden eingesetzt. In Fig. 4 sind in der oberen 8 wie in der unteren 9 Gewebelage in Kette und Schuß eingesetzte Schmelzkleberfäden 17, 18 gezeigt. Die Schmelzkleberschußfäden 18 werden von den Schußnadeln 3 und 4 gleichzeitig mit den Schußfäden 1 und 2 verlegt.

Diese Schmelzkleberfäden werden bei der zuvor beschriebenen Erwärmung schmelzen und eine Adhäsion zwischen der Innenwand des Gewebeschlauchs und der Außenwand des zu ummantelnden Gegenstands schaffen und damit eine unverrückbare Ummantelung erzeugen.

Der in den Figuren 1 bis 3 dargestellte erfindungsgemäße Gewebeschlauch kann vorteilhafterweise mit geringstem Packungsvolumen als Rolle "in sich" aufgewickelt, gelagert und transportiert werden. Er wird bei Bedarf vor Ort in jede gewünschte Länge geschnitten, montiert und aufgeschrumpft. Der Kunde kann den erfindungsgemäßen Gewebeschlauch in großen Gebinden mit optimiertem Lagerplatzbedarf zwischenlagern und verarbeiten, im Einsatzfall auf Länge schneiden und verbauen. Vorteilhafterweise fällt hier außerdem nahezu kein Verschnitt an.

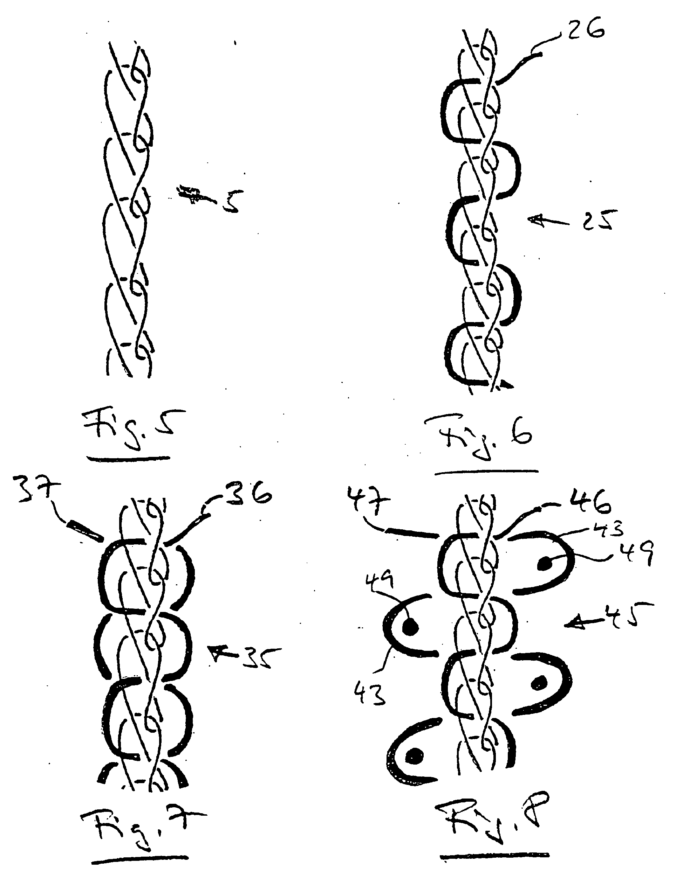

Figur 5 zeigt eine alternative Darstellung eines Blockierfadens 5 in Form eines Maschenstäbchens, das auf einer Häkelmaschine oder einer Rundstrickmaschine oder einer Rundkettenwirkmaschine gehäkelt wurde.

Figur 6 zeigt eine weitere Alternative für einen Blockierfaden 25. Hier erkennt man ein Häkelbändchen, gefertigt auf einer Häkelgalonmaschine, welches zusätzlich mit einem Schußfaden 26 versehen ist.

Figur 7 zeigt eine weitere Alternative eines erfindungsgemäßen Blockierfadens 35, hier ist ebenfalls ein Häkelbändchen zu erkennen, wobei zwei Schußfäden 26 und 27 im Gegentritt eingearbeitet sind.

Figur 8 zeigt eine weitere Alternative eines erfindungsgemäßen Blockierfadens 45, ausgebildet als gehäkelte Masche mit zusätzlichen zwei Schußfäden, von denen ein Schuß über einen Kraller 49 gelaufen ist. Der Kraller 49 hält bei der Herstellung des erfindungsgemäßen Blockierfadens 45 den Schußfaden 47 fest bzw. positioniert dessen Umkehrstellen in einem Abstand von dem Maschenbändchen.

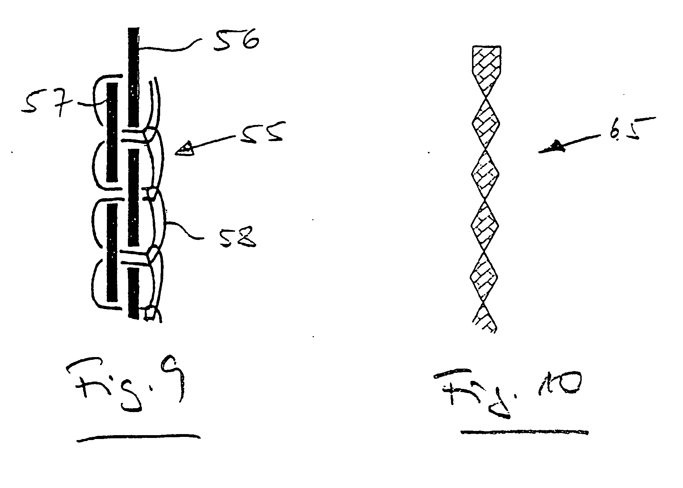

Figur 9 zeigt eine gewebte Alternative des erfindungsgemäßen Blockierfadens 55, beispielsweise gewebt auf einer Nadelbandwebmaschine. Man erkennt an dem hier gezeigten Bändchen 55 zwei Kettfäden 56 und 57, die von einem Schußfaden 58 gehalten werden.

Figur 10 zeigt ein weiteres alternatives Ausführungsbeispiel eines erfindungsgemäßen Blokkierfadens 65, ausgebildet als Geflechtbändchen oder Geflechtschlauch, gefertigt auf einer Flechtmaschine, beispielsweise mit acht Klöppeln. Das hier gezeigte Geflecht bzw. der hier gezeigte Blockierfaden 65 ist mit einer Dick-dünn-Struktur versehen, indem er beispielsweise mittels eines Thermokalanders in die hier dargestellte Form gebracht wurde.

Allen Darstellungen von Blockierfäden der Figuren 5 bis 10 ist gemein, daß sie sehr plausibel die sogenannte Dick-dünn-Struktur des Blockierfadens zeigen, wobei die einzelnen Varianten des erfindungsgemäßen Blockierfadens unterschiedliche Bremswirkungen im Einbauzustand eines erfindungsgemäßen Gewebeschlauchs haben. Dies erklärt sich anhand der gegenüber einem glatten Faden doch bedeutenden seitlichen sich abwechselnden Vorsprünge eigentlich von selbst.

Neben den hier neu entwickelten Varianten von Blockierfäden lassen sich sicher noch weitere Mittel als Blockierfäden mit der im Eingang diskutierten Zielsetzung einsetzen, solange sie die erfindungsgemäße Dick-dünn-Struktur aufweisen.

Insbesondere kann der Blockierfaden als ein auf einer Kemafilmaschine hergestelltes Maschenstäbchen ausgebildet sein. Die Kemafiltechnologie ist zum Beispiel im Artikel "Herstellung von Kordel- und Banderzeugnissen nach der Kemafiltechnologie" von Arnold et al. in "Band- und Flechtindustrie 30 (1993), 4-10, 76-81, 31 (1994), 48-52" beschrieben.

## Patentansprüche

1. Radial schrumpfbarer zweilagig gewebter Gewebeschlauch (10) mit einer oberen und einer unteren Gewebelage (8; 10), wobei die Gewebelagen (8; 10) an ihren Kanten mit Bindungskettfäden (5) miteinander verbunden sind, mit Schussfäden (1; 2) aus hochschrumpfbarem Material und Kettfäden (11; 12) aus schrumpfarmem Material, **dadurch gekennzeichnet, dass** die Bindungskettfäden (5) als Blockierfäden mit einer "dick-dünn-Struktur" ausgebildet sind.

2. Gewebeschlauch nach Anspruch 1, **gekennzeichnet durch** neben den Blockierfäden angeordnete feine Binderfäden, die im Gegentritt eingetragen sind und sich an den Blockierfäden anlegen.

3. Gewebeschlauch nach Anspruch 1 oder 2, **gekennzeichnet durch** Schmelzkleberfäden (17, 18) in Form von Fäden, Bändern oder Folien, die in das Gewebe (10) in Kett- und/oder Schussrichtung eingelegt sind.

4. Gewebeschlauch nach Anspruch 1, 2 oder 3, **gekennzeichnet durch** multifile Kettfäden (11; 12) und monofile Schussfäden (1; 2).

5. Gewebeschlauch nach einem der Ansprüche 1 bis 4, **dadurch gekennzeichnet, dass** die Schmelzkleberfäden (17, 18) nur in von den Schussumkehrstellen entfernten Bereichen eingelegt sind.

6. Gewebeschlauch nach einem der Ansprüche 1 bis 5, **dadurch gekennzeichnet, dass** er rapportmäßig ungleichmäßig von der Webmaschine abgezogen ist und eine nichtzylindrische Form hat.

7. Gewebeschlauch nach einem der Ansprüche 1 bis 6, **dadurch gekennzeichnet, dass** die Schmelzkleberfäden (17, 18) derart eingelegt sind, dass sie im wesentlichen nur im Inneren des Gewebeschlauches (10) an die Oberfläche treten.

8. Gewebeschlauch nach einem der Ansprüche 1 bis 7, **dadurch gekennzeichnet, dass** die Schmelzkleberfäden (17, 18) nach einer einmaligen Erhitzung auf eine bestimmte Temperatur irreversibel ausgehärtet sind.

9. Gewebeschlauch nach einem der Ansprüche 1 bis 8, **dadurch gekennzeichnet, dass** er auf einer Nadelbandwebmaschine mit zwei gegenläufig arbeitenden Schussnadeln (3; 4) hergestellt ist.

10. Gewebeschlauch nach einem der Ansprüche 1 bis 9, **dadurch gekennzeichnet, dass** die Kettfäden und/oder Schussfäden aus Polyestermaterial bestehen.

11. Gewebeschlauch nach einem der vorhergehenden Ansprüche, **dadurch gekennzeichnet, dass** er in den Kantenbereichen wenigstens einen gegenüber den anderen dickeren Kett-faden aufweist.

12. Gewebeschlauch nach einem der vorhergehenden Ansprüche, **dadurch gekennzeichnet, dass** er in der Mitte der oberen und der unteren Gewebelage (8; 10) wenigstens einen gegenüber den anderen dickeren Kettfaden aufweist.

13. Verwendung eines Blockierfadens in einem Gewebeschlauch nach einem der vorhergehenden Ansprüche, **dadurch gekennzeichnet, dass** der Blockierfaden als gehäkeltes, gewirktes, gestricktes oder auf einer Kemafilmaschine hergestelltes Maschenstäbchen ausgebildet ist.

14. Verwendung eines Blockierfadens nach Anspruch 13, **dadurch gekennzeichnet, dass** der Blockierfaden als Maschenstäbchen mit zusätzlichem Schussfaden ausgebildet ist.

15. Verwendung eines Blockierfadens nach Anspruch 13, **dadurch gekennzeichnet, dass** der Blockierfaden als Maschenstäbchen mit zusätzlichen zwei Schussfäden ausgebildet ist.

16. Verwendung eines Blockierfadens nach Anspruch 13, **dadurch gekennzeichnet, dass** der Blockierfaden als Maschenstäbchen mit zusätzlichen zwei Schussfäden, von denen wenigstens einer bei der Herstellung des Blockierfadens über Kraller gehalten wird, ausgebildet ist.

17. Verwendung eines Blockierfadens in einem Gewebeschlauch nach einem der Ansprüche 1 - 12, **dadurch gekennzeichnet, dass** der Blockierfaden als gewebter Blockierfaden, gefertigt auf einer Nadelbandwebmaschine als Schlauch oder Bändchen ausgebildet ist.

18. Verwendung eines Blockierfadens in einem Gewebeschlauch nach einem der Ansprüche 1 - 12, **dadurch gekennzeichnet, dass** der Blockierfaden als Geflechtbändchen oder Geflechtschlauch, gefertigt auf einer Flechtmaschine und mittels Thermokalander mit "dick-dünn-Struktur" versehen, ausgebildet ist.

## Claims

1. A radially shrinkable two-ply tubular woven fabric (10) featuring an upper and a lower woven ply (8; 10), the edges of the woven plies (8; 10) being joined together by binding warp threads (5), including weft threads (1; 2) of high shrink material and warp threads (11; 12) of low-shrink material, **characterized in that** the binding warp threads (5) are configured as blocking threads structured "thick/thin".

2. The tubular woven fabric as set forth in claim 1, **characterized by**, in addition to the blocking threads, fine binding threads incorporated out of step to snugly wrap the blocking thread.

3. The tubular woven fabric as set forth in claim 1 or 2, **characterized in that** fusible adhesive threads (17, 18) in the form of threads, ribbons, or films are inlaid in the warp and/or weft direction of the woven fabric (10).

4. The tubular woven fabric as set forth in any of the claims 1, 2 or 3, **characterized by** multifil warp threads (11; 12) and monofil weft threads (1; 2).

5. The tubular woven fabric as set forth in any of the claims 1 to 4, **characterized in that** the fusible adhesive threads (17, 18) are inlaid only in portions remote from the weft reversals.

6. The tubular woven fabric as set forth in any of the claims 1 to 5, **characterized in that** it is drawn off from the loom in an uneven repeat and is non-cylindrical in shape.

7. The tubular woven fabric as set forth in any of the claims 1 to 6, **characterized in that** the fusible adhesive threads (17, 18) are inlaid such that they surface substantially only in the interior of the tubular woven fabric.

8. The tubular woven fabric as set forth in any of the claims 1 to 7, **characterized in that** once heated to a certain temperature the fusible adhesive threads (17, 18) cure irreversibly.

9. The tubular woven fabric as set forth in any of the claims 1 to 8, **characterized in that** it is fabricated on a narrow fabric weaving loom with weft needles (3; 4) working counterdirectionally.

10. The tubular woven fabric as set forth in any of the claims 1 to 9, **characterized in that** the warp threads and/or weft threads are made of a polyester material.

11. The tubular woven fabric as set forth in any of the preceding claims, **characterized in that** it comprises in the edge portions at least one warp thread which is thicker than the others.

12. The tubular woven fabric as set forth in any of the preceding claims, **characterized in that** it comprises in the middle of the upper and lower ply (8; 10) of the fabric a weft thread which is thicker than the others.

13. Use of a blocking thread in a tubular woven fabric as set forth in any of the preceding claims, **characterized in that** the blocking thread is configured as a crotcheted, warp or weft knitted wale or as a wale produced on a KEMAFIL machine.

14. Use of a blocking thread as set forth in claim 13, **characterized in that** the blocking thread is configured as a wale with an additional weft thread.

15. Use of a blocking thread as set forth in claim 13, **characterized in that** the blocking thread is configured as a wale with an additional two weft threads.

16. Use of a blocking thread as set forth in claim 13, **characterized in that** the blocking thread is configured as a wale with an additional two weft threads, one of which is held by claws in producing the blocking thread.

17. Use of a blocking thread in a tubular woven fabric as set forth in any of the claims 1 - 12 **characterized in that** the blocking thread is configured woven on a narrow fabric weaving loom as a tube or ribbon.

18. Use of a blocking thread in a tubular woven fabric as set forth in any of the claims 1 - 12 **characterized in that** the blocking thread is configured as a braided tube or ribbon on a braiding machine and structured alternatingly "thick/thin" by hot calendering.

## Revendications

1. Gaine textile radialement rétractable, tissée en deux couches (10), présentant une couche textile supérieure et une couche textile intérieure (8; 10), les couches textiles (8; 10) étant reliées entre elles à leurs lisières par des fils de chaine de liaison (5) et des fils de trame (1; 2) en matière hautement rétractable et des fils de chaine (11; 12) en matière peu rétractable, **caractérisée en ce que** les fils de chaine de liaison (5) sont formés comme fils de blocage présentant une "structure épais/mince".

2. Gaine textile selon la revendication 1, **caractérisée par** des fils de liaison fins disposés à côté des fils de blocage, qui sont intégrés dans le coup inverse et qui reposent contre les fils de blocage.

3. Gaine textile selon la revendication 1 ou 2, **caractérisée par** des fils de colle fusible (17, 18) en forme de fils, de rubans ou de films qui sont intégrés dans le tissu (10) en direction de la chaîne et/ou de la trame.

4. Gaine textile selon les revendications 1, 2 ou 3, **caractérisée par** des fils de chaine multifils (11; 12) et des fils de chaine monofils (1; 2).

5. Gaine textile selon l'une quelconque des revendications 1 à 4, **caractérisée en ce que** les fils de colle fusible (17, 18) sont insérés seulement dans des zones éloignées des points d'inversion de la trame.

6. Gaine textile selon l'une quelconque des revendications 1 à 5, **caractérisée en ce que** du point de vue du rapport, elle est irrégulièrement retirée du métier à tisser et présente une forme non-cylindrique.

7. Gaine textile selon l'une quelconque des revendications 1 à 6, **caractérisée en ce que** les fils de colle fusible (17, 18) sont insérés de manière à ce qu'ils n'arrivent à la surface essentiellement qu'à l'intérieure de la gaine textile (10).

8. Gaine textile selon l'une quelconque des revendications 1 à 7, **caractérisée en ce que** les fils de colle fusible (17, 18) sont durcis de manière irréversible après un réchauffement unique à une température déterminée.

9. Gaine textile selon l'une quelconque des revendications 1 à 8, **caractérisée en ce qu'**elle est fabriquée sur une machine pour ruban a aiguille avec deux aiguilles de trame (3; 4) travaillant en sens contraire.

10. Gaine textile selon l'une quelconque des revendications 1 à 9, **caractérisée en ce que** les fils de chaine et/ou les fils de trame consistent en matière polyester.

11. Gaine textile selon l'une quelconque des revendications précédentes, **caractérisée en ce que** dans les zones des lisières elle présente au moins un fil de chaine plus épais par rapport aux autres.

12. Gaine textile selon l'une quelconque des revendications précédentes, **caractérisée en ce qu'**au milieu de la couche textile supérieure et de la couche textile inférieure (8; 10) elle présente au moins un fil de chaine plus épais par rapport aux autres.

13. Utilisation d'un fil de blocage dans une gaine textile selon l'une quelconque des revendications précédentes, **caractérisée en ce que** le fil de blocage est formé comme colonne de mailles crochetée, tricotée, maillée ou fabriquée sur une machine Kemafil.

14. Utilisation d'un fil de blocage selon la revendication 13, **caractérisée en ce que** le fil de blocage est formé comme colonne de mailles avec un fil de trame supplémentaire.

15. Utilisation d'un fil de blocage selon la revendication 13, **caractérisée en ce que** le fil de blocage est formé comme colonne de mailles avec deux fils de trame supplémentaires.

16. Utilisation d'un fil de blocage selon la revendication 13, **caractérisée en ce que** le fil de blocage est formé comme colonne de mailles avec deux fils de trame supplémentaires dont l'un au moins est tenu par des crochets pendant la fabrication du fil de blocage.

17. Utilisation d'un fil de blocage dans une gaine textile selon l'une quelconque des revendications 1 à 12, **caractérisée en ce que** le fil de blocage est formé comme fil de blocage tissé fabriqué sur un métier pour ruban à aiguille comme gaine ou petit ruban.

18. Utilisation d'un fil de blocage dans une gaine textile selon l'une quelconque des revendications 1 à 12, **caractérisée en ce que** le fil de blocage, fabriqué sur un métier à tresser, est forme comme petit ruban tresse ou gaine tressée et est pourvu d'une "structure épais/mince" au moyen d'une thermocalandre.
